# EUROPÄISCHE PATENTSCHRIFT

(11) **EP 4 116 072 B1**
(45) Veröffentlichungstag und Bekanntmachung des Hinweises auf die Patenterteilung: **24.04.2024**
(21) Anmeldenummer: 22171934.7
(22) Anmeldetag: 05.05.2022
(51) Int. Cl.: B29D 29/06

(54) **VERFAHREN ZUR HERSTELLUNG EINES PROFILIERTEN ELASTOMERPRODUKTS**
METHOD FOR PRODUCING A PROFILED ELASTOMERIC PRODUCT
PROCÉDÉ DE FABRICATION D'UN PRODUIT PROFILÉ ÉLASTOMÈRE

(30) Priorität: 07.07.2021 DE 102021207172
(43) Veröffentlichungstag der Anmeldung: 11.01.2023
(73) Patentinhaber: ContiTech Deutschland GmbH, 30175 Hannover (DE)
(72) Erfinder: Fleck, Andreas, 30165 Hannover (DE); Kantorek, Frank, 30165 Hannover (DE); Thamnopoulos, Ioannis, 30165 Hannover (DE)
(74) Vertreter: Continental Corporation

(56) Entgegenhaltungen:
- DE-A1-102013 106 479
- DE-A1-102014 224 291
- DE-A1-102015 218 266

## Beschreibung

Die vorliegende Erfindung betrifft ein Verfahren zur Herstellung eines profilierten Elastomerprodukts gemäß dem Patentanspruch 1, eine Herstellungsanlage für profilierte Elastomerprodukte gemäß dem Patentanspruch 11 sowie eine Form zur Verwendung in einem derartigen Verfahren und bzw. oder in einer derartigen Herstellungsanlage gemäß dem Patentanspruch 14.

Zum Transport von insbesondere losem Fördergut wie zum Beispiel Schüttgut wie zum Beispiel in Form von Steinen, Erz, Kohle, Getreide, Granulat und dergleichen im Bergbau, in der Industrie und auf den Transportwegen werden häufig Förderbänder eingesetzt, welche auch als Transportbänder, Fördergurte bzw. Transportgurte bezeichnet werden können. Derartige Förderbänder werden endlos geschlossen in einer Förderbandanlage bzw. in einer Transportbandanlage verwendet. Die Förderbänder bestehen üblicherweise zumindest im Wesentlichen aus einem flexiblen Material wie zum Beispiel aus einem elastomeren Material wie zum Beispiel aus vulkanisiertem Kautschuk, auch Gummi genannt, in welches in der Zugrichtung, Transportrichtung bzw. Bewegungsrichtung verlaufend Zugträger bzw. Festigkeitsträger zur Übertragung der Zugkräfte eingebettet sind. Derartige Zugträger können bei Förderbändern, welche vergleichsweise große bzw. schwere Lasten zu fördern haben, insbesondere Stahlseile sein, wobei für kleinere Anwendungen auch textile Flächengebilde als Zugträger üblich sind.

Derartige Förderanlagen, welche auch als Förderer bezeichnet werden können, erstrecken sich üblicherweise zumindest im Wesentlichen in der horizontalen Ebene, sodass die einzelnen Komponenten bzw. Anlagenteile der Förderanlage auf einem Untergrund angeordnet sind. Zu den Komponenten einer Förderanlage, welche auch als Anlagenteile bezeichnet werden können, gehört üblicherweise wenigstens eine Antriebsrolle, welche mittels eines Antriebs rotatorisch betrieben werden kann, und am gegenüberliegenden Ende der Förderanlage wenigstens eine Umlenkrolle. Das Förderband wird endlos geschlossen und gespannt um die Antriebsrolle und um die Umlenkrolle gelegt, sodass der obere Bereich des Förderbandes, welcher auch als Obertrum bezeichnet werden kann, mittels des Antriebs der Antriebsrolle in die eine Richtung und der untere Bereich des Förderbandes, welcher auch als Untertrum bezeichnet werden kann, in die entgegengesetzte Richtung bewegt werden kann.

Zwischen der Antriebsrolle und der Umlenkrolle werden üblicherweise zahlreiche Laufrollen angeordnet, welche das Obertrum bzw. das Untertrum des Förderbandes in der vertikalen Richtung von unten abstützen. Derartige Laufrollen können auch als Tragrollen bezeichnet werden. Üblicherweise werden beim Obertrum des Förderbandes in der Querrichtung mehrere und insbesondere drei Laufrollen nebeneinander angeordnet und dabei die äußeren Laufrollen zur horizontalen Ebene schräg gestellt. Hierdurch ergibt sich eine gemuldete Form des Obertrums des Förderbandes, sodass das lose Schüttgut in der Querrichtung seitlich in einem gewissen Maße auf der Oberfläche der Oberseite des Förderbandes gehalten werden kann.

Zum Transport von Fördergut und insbesondere von losem Fördergut in der Horizontalen auf der Oberseite des Fördergurtes im Bereich des Obertrums ist es üblicherweise ausreichend, dass die Oberseite des Fördergurtes flach bzw. eben ausgebildet ist und von der Fördergurtanlage seitens der seitlichen Laufrollen gemuldet verwendet wird.

Soll ein Fördergurt zur Transport von Fördergut und insbesondere von losem Fördergut schräg zur Horizontalen, d.h. mit Steigung, verwendet werden, so kann das Fördergut entgegen der Förderrichtung rutschen, was dem Transport des Fördergutes hinderlich sein kann. Insbesondere kann das Fördergut seitlich über die Ränder des Fördergurtes herübertreten und verloren gehen sowie die Umgebung verschmutzen.

Daher ist es bekannt, Fördergurte auf der Oberseite bzw. auf der Außenseite mit einer Profilierung zu versehen, welche zumindest teilweise in der Querrichtung verläuft und so bei Steigung des Fördergurtes einer Bewegung des Fördergutes entgegenwirken kann. Die Profilierung verläuft üblicherweise entlang der Förderrichtung als Bewegungsrichtung des Fördergurtes bzw. in der Längsrichtung sich wiederholend. Je nach Anwendungsfall bzw. je nach Fördergurt kann die Profilierung, insbesondere hinsichtlich ihrer Höhe in der vertikalen Richtung, unterschiedlich ausfallen. Flachere Profilierungen können dabei bei geringeren Steigungen den gewünschten Effekt erzielen, wohingegen bei größeren Steigungen des Fördergurtes bzw. der Förderanlage höhere Profilierungen erforderlich sein können. Dies gilt auch für Röhrenfördergurte. Somit können Fördergurte mit, ggfs. stark ausgeprägter, Profilierung als sog. Chevrongurte oder Steilfördergurte gerade für steile und insbesondere sehr steile Förderaufgaben verwendet werden.

Die DE 10 2013 104 595 A1 beschreibt einen Fördergurt mit einer tragseitigen Deckplatte und einer laufseitigen Deckplatte mit jeweils einem elastomeren Werkstoff sowie mit einem eingebetteten Zugträger, wobei der Fördergurt durch Überlappung seiner beiden Gurtflanken unter Ausbildung zweier sich berührenden Randzonen zu einem Rohrfördergurt oder zu einem Taschenfördergurt schließbar ist und wobei der Fördergurt auf seiner tragseitigen Deckplatte eine im Wesentlichen senkrecht zur tragseitigen Deckplatte ausgebildete Profilierung aufweist. Die Profilierung ist eine Chevron-Profilierung, welche Diagonalelemente aufweist, die sich zumindest abschnittsweise sowohl in Längsrichtung als auch in Querrichtung des Fördergurtes erstrecken und die paarweise zusammen eine V-Form ergeben, deren Spitze in Längsrichtung entgegen der Förderrichtung ausgerichtet ist.

Die DE 10 2014 224 291 A1 beschreibt einen Fördergurt, insbesondere einen Rohrfördergurt oder einen Taschenfördergurt, mit einem Gurtkörper, welcher eine tragseitige Deckplatte zur Aufnahme von zu transportierenden Fördergut aufweist, wobei auf der tragseitigen Deckplatte eine im Wesentlichen in senkrechter Richtung zur Oberfläche der tragseitigen Deckplatte ausgebildete Profilierung ausgebildet ist, wobei die Profilierung entlang einer Längsrichtung der tragseitigen Deckplatte mehrere Querstreifen-Profilierungsbereiche aufweist, wobei die Profilierung zusätzlich zu den Querstreifen-Profilierungsbereichen entlang der Längsrichtung der tragseitigen Deckplatte mehrere Chevron-Profilierungsbereiche aufweist.

Die Herstellung von profilierten Fördergurten aus einem elastomeren Material wie beispielsweise aus Kautschuk kann bisher prinzipiell mittels zweier Verfahren wie folgt erfolgen:
Zum einen kann ein Ausformen der Profile aus der glatten Gurtkarkasse heraus in eine Profilform während eines einstufigen Vulkanisationsprozesses (Compression Moulding) erfolgen. Mit anderen Worten wird der Fördergurt aus dem unvulkanisierten elastomeren Material und aus den Zugträgern aufgebaut und in die Vulkanisationspresse gegeben, dessen der Oberseite des Fördergurtes zugewandte Form eine Mehrzahl von Kavitäten aufweist, welche der gewünschten Profilierung der Oberseite des Fördergurtes entsprechen. Durch Zusammenpressen der beiden Formen der Vulkanisationspresse wird somit die Profilierung von der entsprechenden Form in die Oberseite des unvulkanisierten Fördergurtes eingedrückt, d.h. ein Teil des unvulkanisierten elastomeren Materials des unvulkanisierten Fördergurtes fließt beim Zusammendrücken der Formen in der Vulkanisationspresse in die Kavitäten der entsprechenden Form. Dann erfolgt das Vulkanisieren, so dass das elastomere Material des Fördergurtes gebildet wird, und zwar einschließlich der Profilierung der Oberseite des Fördergurtes in der Kontur des Vulkanisationsraums der Vulkanisationspresse.

Nachteilig hieran ist, dass durch die Fließvorgänge des unvulkanisierten elastomeren Materials des Fördergurtes während des Verpressvorgangs innerhalb der Vulkanisationspresse es zu erheblichen Verformungen des Gurtaufbaus kommen kann. Hierdurch können sich Gewebearmierungen sowie Zugträger verschieben. Insbesondere können sich Gewebearmierungen wellenförmig in Richtung der Profilkavitäten der Form einprägen. Weiterhin können Ausformfehler entstehen, d.h. das unvulkanisierte elastomere Material füllt die Kavitäten der Form nicht vollständig aus, wodurch die vulkanisierte Profilierung lückenhaft ausgebildet wird. Ferner ist die Herstellung sehr hoher Profile auf diese Art und Weise gar nicht möglich, weil durch das Verpressen gar nicht ausreichend viel unvulkanisiertes elastomeres Material in die Kavitäten der Form gepresst werden kann.

Zum anderen kann eine Vorfertigung der Profile, z.B. durch Extrusion, als separate Elemente mit anschließendem Zuschnitt erfolgen, so dass die Profile einzeln aus dem unvulkanisierten elastomeren Material ausgebildet werden können. Anschließend werden die unvulkanisierten elastomeren Profilelemente auf der Oberseite des Fördergurtes an den entsprechenden Stellen positioniert oder die die unvulkanisierten elastomeren Profilelemente werden direkt in die Kavitäten der Formen eingelegt. Der Fördergurt kann hierzu entweder unvulkanisiert oder vorvulkanisiert sein. In jedem Fall erfolgt ein anschließendes Vulkanisieren von Fördergurt und aufgesetzter Profilierung.

Vorteilhaft gegenüber dem zuvor beschriebenen Vorgehen ist zwar, dass durch das Vorfertigen der unvulkanisierten elastomeren Profilelemente als Profilklötze bzw. als Profilstollen extreme Fließvorgänge vermieden werden können. Nachteilig ist jedoch, dass die Genauigkeit der vorgefertigten Profile üblicherweise nicht sehr hoch ist, so dass weiterhin Fehlstellen auftreten können. Der zusätzliche Arbeitsaufwand ist zudem üblicherweise sehr hoch, was die Herstellungskosten entsprechend erhöhen kann. Ferner ist bei vorvulkanisierten Gurtkarkassen des Fördergurtes selbst die Haftung der aufgesetzten unvulkanisierten elastomeren Profilelemente begrenzt, weshalb die vulkanisierte Oberfläche des Fördergurtes durch Aufrauhen sowie durch das Aufbringen einer Gummilösung aktiviert werden muss, was den Herstellungsaufwand weiter erhöht und das optische Erscheinungsbild des Fördergurtes negativ beeinflusst.

Gemeinsam ist beiden Prozessvarianten, dass die Qualität der Profilierung des vulkanisierten profilierten Fördergurtes üblicherweise nicht wie gewünscht ausfällt.

Die DE 10 2013 106 479 A1 beschreibt einen Fördergurt mit einer tragseitigen Deckplatte und einer laufseitigen Deckplatte mit jeweils einem elastomeren Werkstoff sowie mit einem eingebetteten Zugträger, wobei der Fördergurt durch Überlappung seiner beiden Gurtflanken unter Ausbildung zweier sich berührenden Randzonen zu einem Rohrfördergurt oder zu einem Taschenfördergurt schließbar ist und wobei der Fördergurt auf seiner tragseitigen Deckplatte eine im Wesentlichen senkrecht zur tragseitigen Deckplatte ausgebildete Profilierung aufweist. Die Profilierung ist eine Chevron-Profilierung, die Diagonalelemente aufweist, die sich zumindest abschnittsweise sowohl in Längsrichtung als auch in Querrichtung des Fördergurtes erstrecken und die paarweise zusammen eine V-Form ergeben, deren Spitze in Längsrichtung entgegen der Förderrichtung ausgerichtet ist.

Eine Aufgabe der vorliegenden Erfindung ist es, ein Verfahren zur Herstellung eines profilierten Elastomerprodukts, vorzugweise eines profilierten Fördergurtes, der eingangs beschriebenen Art bereit zu stellen, so dass das profilierte Elastomerprodukt einfacher, schneller, kostengünstiger und bzw. oder flexibler als bisher bekannt hergestellt werden kann. Insbesondere soll auf das Vorfertigen und Einlegen von vorvulkanisierten Profilierungselementen verzichtet werden können. Insbesondere sollen die profilierten Elastomerprodukte verformungsfrei, mit einer verbesserten Güte der Ausformung der Profilierung und bzw. oder mit einer verbesserten Haftung der Profilierung auf dem elastomeren Grundkörper hergestellt werden können. Zumindest soll eine Alternative zu bekannten derartigen Verfahren geschaffen werden.

Die Aufgabe wird erfindungsgemäß durch eine Verfahren mit den Merkmalen gemäß Patentanspruch 1, durch eine Herstellungsanlage mit den Merkmalen gemäß Patentanspruch 11 sowie durch eine Form mit den Merkmalen gemäß Patentanspruch 14 gelöst. Vorteilhafte Weiterbildungen sind in den Unteransprüchen beschrieben.

Somit betrifft die vorliegende Erfindung ein Verfahren zur Herstellung eines profilierten Elastomerprodukts, vorzugweise eines profilierten Fördergurtes, mit wenigstens den Schritten:
- Bereitstellen eines elastomeren Grundkörpers, vorzugsweise mit eingebetteten in Längsrichtung verlaufenden Zugträgern, vorzugsweise Stahlseilen oder Textil, des Elastomerprodukts,
- Füllen einer Mehrzahl von Formen mit einem unvulkanisierten elastomeren Material, wobei die Formen gemeinsam die Kontur der Profilierung des Elastomerprodukts abbilden,
- Zusammenführen der zu profilierenden Seite des elastomeren Grundkörpers des Elastomerprodukts mit den unvulkanisierten elastomeren Profilierungen in den Formen derart, dass die elastomeren Materialien in Kontakt sind, und
- Vulkanisieren der unvulkanisierten elastomeren Profilierungen der Formen mit dem elastomeren Grundkörper des Elastomerprodukts.

Mittels eines derartigen Verfahren können unterschiedliche Elastomerprodukte wie beispielsweise Reifen, Riemen, insbesondere Antriebsriemen sowie Aufzugsriemen, Förder- bzw. Transportbänder, Gummiketten für Gummikettenantriebe und dergleichen mit einer Profilierung versehen werden. Dies gilt sowohl für vergleichsweise flache als auch für vergleichsweise hohe Profilierungen. Auch können auf diese Art und Weise Wellkanten sowie Seitenkantenprofile oben auf bzw. seitlich an Fördergurten angebracht werden.

Der vorliegenden Erfindung liegt dabei die Erkenntnis zugrunde, dass mittels des zuvor beschriebenen Verfahrens eine besonders gute Bindung zwischen der Profilierung und dem Grundkörper, auch Karkasse genannt, erreicht werden kann, indem die Profilierung unvulkanisiert auf den Grundkörper aufgebracht und Profilierung und Grundkörper dann gemeinsam vulkanisiert werden. Auch kann das Füllen der Formen mit dem anschließenden Vulkanisieren auf dem Grundkörper die Güte der Ausformung der Profilierung verbessern, so dass eine vergleichsweise hohe Genauigkeit der Profilkonturen sowie eine hohe Oberflächengüte der profilfreien Bereiche der Oberfläche des Elastomerprodukts erreicht und insbesondere optisch sichtbare Fließbilder vermieden werden können.

Das Füllen kann insbesondere mittels "Injektionspressen" oder "injection moulding" erfolgen, um die Kavität mit einem exakt definierten Volumen des unvulkanisierten elastomeren Materials zu füllen. Hierdurch kann die Ausbildung der Konturen der Profile verbessert werden, da das unvulkanisierte elastomere Material mittels "Injektionspressen" die Kavitäten der Formen vollständiger füllen und daher entsprechend genauer abbilden kann als bisher bekannt.

Vorteilhaft ist ferner, dass auf diese Art und Weise während des Herstellungsprozesses der Druck bzw. die Kraft auf den unvulkanisierten elastomeren Grundkörper derart gleichmäßig ausgeübt wird, so dass Fließvorgänge der unvulkanisierten elastomeren Materialien vermieden werden können und es somit auch zu keiner Verformung des elastomeren Grundkörpers des Elastomerprodukts bzw. zu einer Verschiebung von Zugträgern innerhalb des unvulkanisierten elastomeren Materials des Grundkörpers kommen kann.

Vorteilhaft ist auch, dass durch die Gestaltung der Formen das Herstellungsverfahren schnell, einfach, kostengünstig und bzw. oder flexibel an unterschiedliche Profilierungen angepasst werden kann. Insbesondere kann eine entsprechende Herstellungsanlage nur durch Austausch der Formen umgerüstet werden, um unterschiedliche profilierte Elastomerprodukte der gleichen Art, wie beispielsweise unterschiedliche Förderbänder, herstellen zu können. Dabei können die Werkzeugkosten der Formen vergleichsweise geringgehalten werden, da vergleichsweise kleine Formen, jeweils vorzugsweise für genau ein sich wiederholendes Profilierungselement der Profilierung, als standardisierte Werkezuge verwendet werden können. Eine geringe Größe bzw. ein geringes Gewicht der einzelnen Formen kann auch die Handhabung erleichtern.

Vorteilhaft ist ferner, dass sich das Verfahren sehr gut zur Automatisierung eignet, da die Schritte einzeln automatisiert sowie innerhalb einer Herstellungsanlage hintereinander ausgeführt werden können, wodurch die Kosten des Verfahrens geringgehalten werden können.

Gemäß einem Aspekt der Erfindung weist das Verfahren wenigstens den weiteren Schritt auf:
- Entfernen der Formen von den vulkanisierten elastomeren Profilierungen des Elastomerprodukts.

Hierdurch kann die Ausbildung der Profilierung abgeschlossen werden.

Gemäß einem weiteren Aspekt der Erfindung weist das Verfahren wenigstens den weiteren Schritt auf:
- Reinigen der Formen von vulkanisiertem elastomeren Material.

Hierdurch können die Formen nach der Verwendung für eine erneute Verwendung, d.h. für ein erneutes Füllen, vorbereitet werden, um die Kontur der Profilierung möglichst vollständig und akkurat auszubilden.

Gemäß einem weiteren Aspekt der Erfindung weist das Verfahren wenigstens den weiteren Schritt auf:
- erneutes Füllen der Formen mit dem unvulkanisierten elastomeren Material.

Hierdurch kann eine erneute Verwendung der Formen erfolgen.

Gemäß einem weiteren Aspekt der Erfindung weist das Verfahren nach dem Zusammenführen und vor dem Vulkanisieren wenigstens den weiteren Schritt auf:
- Verpressen der zu profilierenden Seite des elastomeren Grundkörpers des Elastomerprodukts mit den unvulkanisierten elastomeren Profilierungen in den Formen.

Hierdurch kann die Bindung bzw. die Festigkeit der stoffschlüssig vulkanisierten elastomeren Materialien verbessert werden.

Gemäß einem weiteren Aspekt der Erfindung weist das Verfahren nach dem Vulkanisieren wenigstens den weiteren Schritt auf:
- abschnittsweises Bewegen des elastomeren Grundkörper des Elastomerprodukts mit den vulkanisierten elastomeren Profilierungen aus einer Vulkanisationsvorrichtung heraus und gleichzeitig abschnittsweises Bewegen des elastomeren Grundkörper des Elastomerprodukts mit unvulkanisierten elastomeren Profilierungen in die Vulkanisationsvorrichtung hinein.

Hierdurch kann eine kontinuierliche Herstellung des profilierten Elastomerprodukts erfolgen.

Vorteilhaft ist hierbei auch, dass die Genauigkeit der Positionierung der Profilierung auf der zu profilierenden Seite des elastomeren Grundkörpers des Elastomerprodukts erhöht werden kann. Wurde nämlich bisher der fertige Abschnitt eines zu profilierenden Fördergurtes entformt und mit einem gewissen Überlapp wieder eingeformt, d.h. im nachfolgenden Abschnitt mit fertigen Profilierungen versehen und dann vulkanisiert, so kann es zwischen den Abschnitten im Bereich des Überlapps üblicherweise zu ungenauen Doppelverpressungen kommen. Dies kann erfindungsgemäß dadurch ausgeschlossen werden, dass der unvulkanisierte elastomere Grundkörper des Elastomerprodukts mit den unvulkanisierten elastomeren Profilierungen in den Formen durch die Herstellungsanlage "wandert", d.h. bewegt wird, und somit der unvulkanisierte elastomere Grundkörper des Elastomerprodukts so lange eingeformt bleibt, bis der vulkanisierte elastomere Grundkörper des Elastomerprodukts die Presse der Herstellungsanlage verlassen hat.

Gemäß einem weiteren Aspekt der Erfindung weist das Verfahren wenigstens den weiteren Schritt auf:
- vor dem Zusammenführen oder beim Zusammenführen, Verbinden der Formen mit dem unvulkanisierten elastomeren Material, vorzugsweise formschlüssig und bzw. oder kraftschlüssig, zu einer, vorzugsweise in der Längsrichtung und bzw. oder in der Querrichtung, zusammenhängenden Anordnung von Formen.

Dies kann die Handhabung der Formen während des Verfahrens vereinfachen. Dabei das Verbinden der Formen formschlüssig zum Beispiel mittels Einhaken oder mit Verriegelungselementen umzusetzen kann dies vereinfachen. Das Verbinden kann, zusätzlich oder alternativ, aber auch kraftschlüssig erfolgen, beispielsweise durch längs- und bzw. oder querseitiges Zusammendrücken mit einer entsprechenden Vorrichtung.

Die Teilung der Formen in der Längsrichtung, d.h. die Anordnung der Formen hintereinander in Fertigungsrichtung, ermöglicht die Umsetzung einer Profilierung des Fördergurtes entlang dessen länglicher Erstreckungsrichtung. Die Teilung der Formen in der Querrichtung, d.h. die Anordnung der Formen nebeneinander in Fertigungsrichtung, kann die Ausbildung der Profilierung vor allem bei vergleichsweise breiten Fördergurten und bzw. oder die Fertigung von zwei Fördergurten gleichzeitig mittels derselben Herstellungsanlage ermöglichen. Die Verbindung formschlüssig vorzunehmen kann das Verbinden sowie spätere Trennen erleichtern.

Gemäß einem weiteren Aspekt der Erfindung erfolgt das Zusammenführen entlang einer Längsrichtung in der Horizontalen. Dies kann das Zusammenführen erleichtern.

Gemäß einem weiteren Aspekt der Erfindung erfolgt das Zusammenführen derart, dass der elastomere Grundkörper des Elastomerprodukts mit seiner zu profilierenden Seite in der vertikalen Richtung von oben auf die Mehrzahl von Formen mit dem unvulkanisierten elastomeren Material aufgebracht wird. Dies kann das Zusammenführen erleichtern, da die einzelnen Formen einfacher angeordnet und insbesondere verbunden werden können, indem die Formen auf einem Untergrund angeordnet werden und dann der Grundkörper auf die Formen aufgebracht wird.

Gemäß einem weiteren Aspekt der Erfindung wird der elastomere Grundkörper des Elastomerprodukts unvulkanisiert oder vulkanisiert. Wird auch der Grundkörper unvulkanisiert bereitgestellt, kann dies die Verbindung zwischen den Profilierungen und dem Grundkörper verbessern, da sich deren elastomere Materialien im unvulkanisierten Zustand besser verbinden und somit im vulkanisierten Zustand stoffschlüssig stärker aneinanderhaften können. Wird der Grundkörper vorab vulkanisiert, kann dies die stoffschlüssige Verbindung zwischen Profilierungen und Grundkörper schwächen, wenngleich diese dennoch wie zuvor beschrieben vergleichsweise stark sein kann und ggfs. durch Aufrauen sowie durch das Aufbringen einer Gummilösung aktiviert bzw. verbessert werden kann. Jedoch kann dies die Flexibilität des Verfahrens erhöhen, indem der Grundkörper unabhängig vulkanisiert werden kann. Insbesondere können so nachträglich Elastomerprodukte mit einer Profilierung versehen werden.

Gemäß einem weiteren Aspekt der Erfindung erfolgt das Füllen der Formen mit einem unvulkanisierten elastomeren Material als Spritzgussverfahren. Dies kann die Umsetzung des Füllen vereinfachen.

Gemäß einem weiteren Aspekt der Erfindung entspricht das unvulkanisierte elastomere Material der Profilierung dem unvulkanisierten elastomeren Material des Grundkörpers. Mit anderen Worten wird das gleiche elastomere Material für die Profilierung und für den Grundkörper verwendet. Dies kann die Haftung bzw. die stoffschlüssige Verbindung zwischen Profilierung und Grundkörper verbessern.

Die vorliegende Erfindung betrifft auch eine Herstellungsanlage für profilierte Elastomerprodukte, vorzugweise für profilierte Fördergurte,
- mit einer Bereitstellungsvorrichtung, vorzugsweise einer Wickelvorrichtung, zum Bereitstellen eines elastomeren Grundkörpers, vorzugsweise mit eingebetteten in Längsrichtung verlaufenden Zugträgern, vorzugsweise Stahlseilen oder Textil, des Elastomerprodukts,
- mit einer Mehrzahl von Formen, welche gemeinsam die Kontur der Profilierung des Elastomerprodukts abbilden,
- mit einer Füllvorrichtung zum Füllen der Formen mit einem unvulkanisierten elastomeren Material,
- mit einer Zusammenführungsvorrichtung zum Zusammenführen der zu profilierenden Seite des elastomeren Grundkörpers des Elastomerprodukts mit den unvulkanisierten elastomeren Profilierungen in den Formen derart, dass die elastomeren Materialien in Kontakt sind, und
- mit einer Vulkanisationsvorrichtung, vorzugsweise einer Vulkanisationspresse, zum Vulkanisieren der elastomeren unvulkanisierten Profilierungen der Formen mit dem elastomeren Grundkörper des Elastomerprodukts.

Mittels einer derartigen Herstellungsanlage kann ein erfindungsgemäßes Verfahren wie zuvor beschrieben umgesetzt und dessen Eigenschaften und Vorteile genutzt werden.

Die vorliegende Erfindung betrifft auch eine Form zur Verwendung bei einem Verfahren wie zuvor beschrieben und bzw. oder in einer Herstellungsanlage wie zuvor beschrieben. Hierdurch kann eine Form geschaffen werden, um ein Verfahren bzw. eine Herstellungsanlage umsetzen und dessen Eigenschaften und Vorteile nutzen zu können.

Ein Ausführungsbeispiel und weitere Vorteile der Erfindung werden nachstehend im Zusammenhang mit den folgenden Figuren erläutert. Darin zeigt:
Fig. 1 eine schematische seitliche Darstellung eines erfindungsgemäßen Verfahrens anhand einer erfindungsgemäßen Herstellungsanlage;
Fig. 2 eine erfindungsgemäße Form gefüllt mit unvulkanisiertem elastomeren Material; und
Fig. 3 einen Abschnitt eines vulkanisierten profilierten Elastomerprodukts in Form eines profilierten Fördergurtes.

Die Beschreibung der o.g. Figuren erfolgt in kartesischen Koordinaten mit einer Längs¬richtung X, einer zur Längsrichtung X senkrecht ausgerichteten Querrichtung Y sowie einer sowohl zur Längsrichtung X als auch zur Querrichtung Y senkrecht ausgerichteten vertikalen Richtung Z. Die Längsrichtung X kann auch als Tiefe X, die Querrichtung Y auch als Breite Y und die vertikale Richtung Z auch als Höhe Z bezeichnet werden. Die Längsrichtung X und die Querrichtung Y bilden gemeinsam die Horizontale, X, Y, welche auch als horizontale Ebene X, Y bezeichnet werden kann. Die Längsrichtung X, die Querrichtung Y und die vertikale Richtung Z können gemeinsam auch als Raumrichtungen X, Y, Z bzw. als kartesische Raumrichtungen X, Y, Z bezeichnet werden.

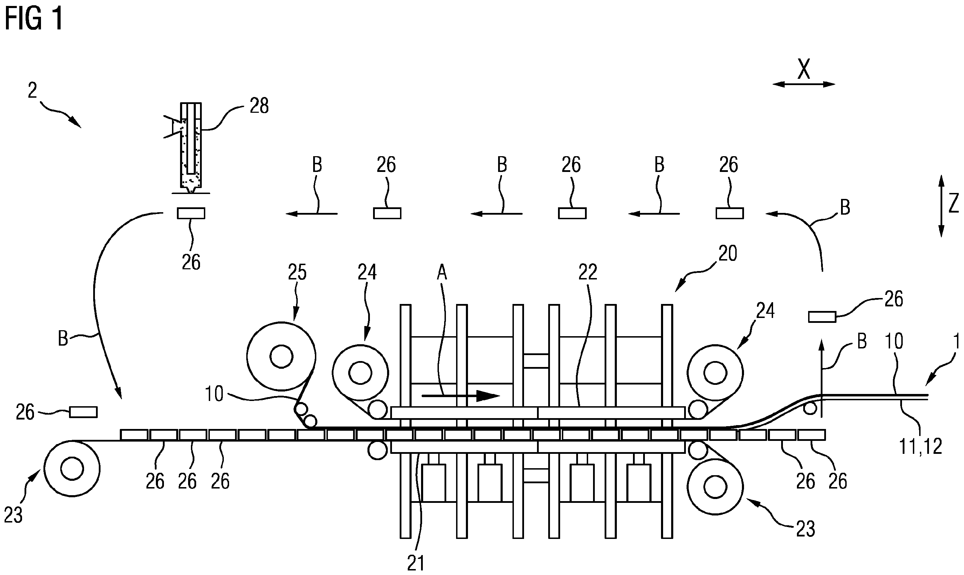

Eine erfindungsgemäße Herstellungsanlage 1 für profilierte Elastomerprodukte 2 wird für profilierte Fördergurte 2 in der Fig. 1 beispielhaft betrachtet. Die Herstellungsanlage 1 für profilierte Fördergurte 2 weist eine Vulkanisationsvorrichtung 20 in Form einer Vulkanisationspresse 20 auf. Die Vulkanisationspresse 20 weist eine erste, untere beheizbare Druckplatte 21 und eine zweite, obere beheizbare Druckplatte 22 auf, siehe Fig. 1, wobei die zweite, obere beheizbare Druckplatte 22 in der vertikalen Richtung Z gegenüber der ersten, unteren beheizbaren Druckplatte 21 angehoben werden kann, um einen Zwischenraum (nicht bezeichnet) als Vulkanisationsraum zu schaffen.

Durch diesen Zwischenraum hindurch verläuft, auf der ersten, unteren beheizbaren Druckplatte 21 aufliegend, eine Zusammenführungsvorrichtung 23 in Form einer ersten, unteren Einzugsvorrichtung 23 sowie an der zweiten, oberen beheizbaren Druckplatte 22 anliegend eine zweite, obere Einzugsvorrichtung 24. Die beiden Einzugsvorrichtungen 23, 24 können auf der einen Seite des Zwischenraums, in der Darstellung der Fig. 1 links des Zwischenraums, abgewickelt und in der Längsrichtung X gegenüberliegenden Seite des Zwischenraums, in der Darstellung der Fig. 1 rechts des Zwischenraums, aufgewickelt werden, so dass mittels der beiden Einzugsvorrichtungen 23, 24 eine Bewegung in der Längsrichtung X bzw. in einer Bewegungsrichtung A durch den Zwischenraum hindurch erfolgen kann.

Links des Zwischenraums, gemäß der Darstellung der Fig. 1, ist eine Bereitstellungsvorrichtung 25 in Form einer Wickelvorrichtung 25 angeordnet, auf welcher ein unvulkanisierter elastomerer Grundkörper 10 des zu profilierenden Fördergurtes 1 mit in der Längsrichtung X verlaufenden eingebetteten Zugträgern in Form von Stahlseilen oder Textil bzw. textiles Gewebe aufgewickelt ist. Ein Ende des unvulkanisierten elastomeren Grundkörpers 10 wird in den Zwischenraum geführt, wie weiter unten näher beschrieben werden wird.

Zur Herstellungsanlage 2 gehören auch eine Mehrzahl von Formen 26 in Form von Profilwerkzeugen 26, welche gleich ausgebildet sind und in korrekter Anordnung gemeinsam die gewünschte Profilierung 12 auf der Oberseite 11 des elastomeren Grundkörpers 10 ergeben. Die Formen 26 bilden gemeinsam die Kontur der Profilierung 12 des Fördergurtes 1 aus. Die Formen 26 weisen jeweils Formkavitäten 27 bzw. Profilkavitäten 27 auf, welche an einer Füllvorrichtung 28 der Herstellungsanlage 2 mittels eines Spritzgussverfahrens mit dem gleichen unvulkanisierten elastomeren Material gefüllt werden, aus welchem auch der unvulkanisierte elastomere Grundkörper 10 besteht. Hierdurch werden in den Formkavitäten 27 unvulkanisierte Profilelemente 13 geschaffen.

Mittels der erfindungsgemäßen Herstellungsanlage 2 kann nun die Herstellung eines profilierten Fördergurtes 1 mittels eines erfindungsgemäßen Verfahrens derart erfolgen, dass der unvulkanisierte elastomere Grundkörper 10 seitens der Wickelvorrichtung 25 bereitgestellt wird, wie bereits zuvor erwähnt. Mittels der Füllvorrichtung 28 können nacheinander mehrere Formen 26 mit dem unvulkanisierten elastomeren Material gefüllt werden. Die gefüllten Formen 26 werden nacheinander von oben auf dem Band der ersten, unteren Einzugsvorrichtung 24 abgelegt und dabei formschlüssig miteinander durch Einhaken verbunden, so dass die Formen 26 eine in der Horizontalen X, Y sich in der Längsrichtung X erstreckende Kette von Formen 26 bilden, welche einem Teilbereich bzw. einem Abschnitt der Profilierung 12 der Oberseite 11 des Fördergurtes 1 entspricht.

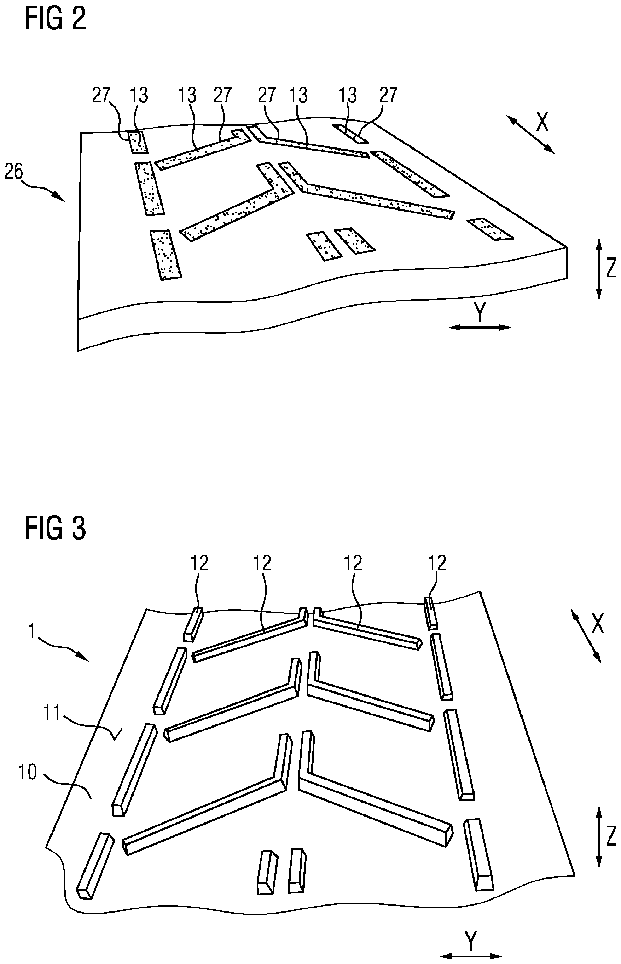

Nun wird der unvulkanisierte elastomere Grundkörper 10 von oben auf die Formen 26 aufgelegt, so dass die Oberseite bzw. die Außenseite als zu profilierende Seite des unvulkanisierten elastomeren Grundkörpers 10 des Fördergurtes 1 mit den unvulkanisierten elastomeren Profilierungen 12 in den Formen 26 in Kontakt kommt. Dabei wird die Kette der Formen 26 samt aufliegendem Grundkörper 10 von der ersten, unteren Einzugsvorrichtung 23 in der Bewegungsrichtung A abschnittsweise in den Zwischenraum der Vulkanisationspresse 20 bewegt, so dass dieser Abschnitt dann durch Schließen, Drücken und Beheizen der Vulkanisationspresse 20 vulkanisiert werden kann, wodurch die Profilierungen 13 und der Grundkörper 10 stoffschlüssig verbunden werden, siehe Fig. 3.

Nach Öffnen der Vulkanisationspresse 20 kann der vulkanisierte Abschnitt des Fördergurtes 1 von der ersten, unteren Einzugsvorrichtung 23 nach rechts aus dem Zwischenraum herausgefahren und der nachfolgende unvulkanisierte Abschnitt des Fördergurtes 1 von der ersten, unteren Einzugsvorrichtung 23 von links in den Zwischenraum eingezogen werden, um anschließend vulkanisiert zu werden, wie zuvor beschrieben. Dieser nachfolgende unvulkanisierte Abschnitt des Fördergurtes 1 konnte während des vorangehenden Vulkanisationsvorgangs wie zuvor beschrieben vorbereitet werden, so dass das Verfahren durchgängig sowie mit einer gewissen Automation durchgeführt werden kann.

Rechts der Vulkanisationspresse 20 wird der vulkanisierte Abschnitt des profilierten Fördergurtes 1 von den Formen 26 abgenommen und nach rechts weitergeführt, wo eine Inspektion, eine Reinigung und dergleichen sowie abschließend ein Aufwickeln zwecks Lagerung bzw. Transport erfolgen kann. Parallel hierzu werden die verwendeten Formen 26 ggfs. gereinigt und in jedem Fall dann wieder in einer Prozessablaufrichtung B zur Füllvorrichtung 28 gebracht, um erneut befüllt und dann wieder links der Vulkanisationspresse 20 zusammengeführt zu werden, wie zuvor beschrieben. Somit kann das Verfahren mit vergleichsweise wenigen Formen 26, in Relation zur Länge des Fördergurtes 1, durchgeführt werden.

### Bezugszeichenliste (Teil der Beschreibung)

- A: Bewegungsrichtung
- B: Prozessablaufrichtung

- X: Längsrichtung; Tiefe
- Y: Querrichtung; Breite
- Z: vertikale Richtung; Höhe
- X, Y: Horizontalen; horizontale Ebene

- 1: profiliertes Elastomerprodukt; profilierter Fördergurt
- 10: elastomerer Grundkörper
- 11: Oberseite
- 12: Profilierung
- 13: unvulkanisierte Profilelemente

- 2: Herstellungsanlage für profilierte Elastomerprodukte 1
- 20: Vulkanisationsvorrichtung; Vulkanisationspresse
- 21: erste, untere beheizbare Druckplatte
- 22: zweite, obere beheizbare Druckplatte
- 23: Zusammenführungsvorrichtung; erste, untere Einzugsvorrichtung
- 24: zweite, obere Einzugsvorrichtung
- 25: Bereitstellungsvorrichtung; Wickelvorrichtung
- 26: Formen; Profilwerkzeuge
- 27: Formkavitäten; Profilkavitäten
- 28: Füllvorrichtung

## Patentansprüche

1. Verfahren zur Herstellung eines profilierten Elastomerprodukts (1), vorzugweise eines profilierten Fördergurtes (1), mit wenigstens den Schritten:
• Bereitstellen eines elastomeren Grundkörpers (10), vorzugsweise mit eingebetteten in Längsrichtung verlaufenden Zugträgern, vorzugsweise Stahlseilen oder Textil, des Elastomerprodukts (1),
• Füllen einer Mehrzahl von Formen (26) mit einem unvulkanisierten elastomeren Material, wobei die Formen (26) gemeinsam die Kontur der Profilierung (12) des Elastomerprodukts (1) abbilden,
• Zusammenführen der zu profilierenden Seite des elastomeren Grundkörpers (10) des Elastomerprodukts (1) mit den unvulkanisierten elastomeren Profilierungen (12) in den Formen (26) derart, dass die elastomeren Materialien in Kontakt sind, und
• Vulkanisieren der unvulkanisierten elastomeren Profilierungen (12) der Formen (26) mit dem elastomeren Grundkörper (10) des Elastomerprodukts (1).

2. Verfahren nach Anspruch 1 mit wenigstens dem weiteren Schritt:
• Entfernen der Formen (26) von den vulkanisierten elastomeren Profilierungen (12) des Elastomerprodukts (1).

3. Verfahren nach Anspruch 2 mit wenigstens dem weiteren Schritt:
• Reinigen der Formen (26) von vulkanisiertem elastomeren Material.

4. Verfahren nach Anspruch 2 oder 3 mit wenigstens dem weiteren Schritt:
• erneutes Füllen der Formen (26) mit dem unvulkanisierten elastomeren Material.

5. Verfahren nach einem der vorangehenden Ansprüche mit wenigstens dem weiteren Schritt nach dem Zusammenführen und vor dem Vulkanisieren:
• Verpressen der zu profilierenden Seite des elastomeren Grundkörpers (10) des Elastomerprodukts (1) mit den unvulkanisierten elastomeren Profilierungen (12) in den Formen (26).

6. Verfahren nach einem der vorangehenden Ansprüche mit wenigstens dem weiteren Schritt nach dem Vulkanisieren:
• abschnittsweises Bewegen des elastomeren Grundkörper (10) des Elastomerprodukts (1) mit den vulkanisierten elastomeren Profilierungen (12) aus einer Vulkanisationsvorrichtung (20) heraus und gleichzeitig abschnittsweises Bewegen des elastomeren Grundkörper (10) des Elastomerprodukts (1) mit unvulkanisierten elastomeren Profilierungen (12) in die Vulkanisationsvorrichtung (20) hinein.

7. Verfahren nach einem der vorangehenden Ansprüche mit wenigstens dem weiteren Schritt:
• vor dem Zusammenführen oder beim Zusammenführen, Verbinden der Formen (26) mit dem unvulkanisierten elastomeren Material, vorzugsweise formschlüssig und/oder kraftschlüssig, zu einer, vorzugsweise in der Längsrichtung (X) und/oder in der Querrichtung (Y), zusammenhängenden Anordnung von Formen (26).

8. Verfahren nach einem der vorangehenden Ansprüche, **dadurch gekennzeichnet, dass**
das Zusammenführen entlang einer Längsrichtung (X) in der Horizontalen (X, Y) erfolgt.

9. Verfahren nach einem der vorangehenden Ansprüche, **dadurch gekennzeichnet, dass**
das Zusammenführen derart erfolgt, dass der elastomere Grundkörper (10) des Elastomerprodukts (1) mit seiner zu profilierenden Seite in der vertikalen Richtung (Z) von oben auf die Mehrzahl von Formen (26) mit dem unvulkanisierten elastomeren Material aufgebracht wird.

10. Verfahren nach einem der vorangehenden Ansprüche, **dadurch gekennzeichnet, dass**
der elastomere Grundkörpers (10) des Elastomerprodukts (1) unvulkanisiert oder vulkanisiert bereitgestellt wird.

11. Verfahren nach einem der vorangehenden Ansprüche, **dadurch gekennzeichnet, dass**
das Füllen der Formen (26) mit einem unvulkanisierten elastomeren Material als Spritzgussverfahren erfolgt.

12. Verfahren nach einem der vorangehenden Ansprüche, **dadurch gekennzeichnet, dass**
das unvulkanisierte elastomere Material der Profilierung (12) dem unvulkanisierten elastomeren Material des Grundkörpers (10) entspricht.

13. Herstellungsanlage (2) für profilierte Elastomerprodukte (1), vorzugsweise für profilierte Fördergurte (1),
mit einer Bereitstellungsvorrichtung (25), vorzugsweise Wickelvorrichtung (25), zum Bereitstellen eines elastomeren Grundkörpers (10), vorzugsweise mit eingebetteten in Längsrichtung verlaufenden Zugträgern, vorzugsweise Stahlseilen oder Textil, des Elastomerprodukts (1),
mit einer Mehrzahl von Formen (26), welche gemeinsam die Kontur der Profilierung (12) des Elastomerprodukts (1) abbilden,
mit einer Füllvorrichtung (28) zum Füllen der Formen (26) mit einem unvulkanisierten elastomeren Material,
mit einer Zusammenführungsvorrichtung (23) zum Zusammenführen der zu profilierenden Seite des elastomeren Grundkörpers (10) des Elastomerprodukts (1) mit den unvulkanisierten elastomeren Profilierungen (12) in den Formen (26) derart, dass die elastomeren Materialien in Kontakt sind, und
mit einer Vulkanisationsvorrichtung (20), vorzugsweise einer Vulkanisationspresse (20), zum Vulkanisieren der elastomeren unvulkanisierten Profilierungen (12) der Formen (26) mit dem elastomeren Grundkörper (10) des Elastomerprodukts (1).

14. Form (26) zur Verwendung bei einem Verfahren nach einem der Ansprüche 1 bis 10 und/oder in einer Herstellungsanlage (2) nach Anspruch 13.

## Claims

1. Method for producing a profiled elastomer product (1), preferably a profiled conveyor belt (1), comprising at least the steps of:
• providing an elastomeric main body (10), preferably comprising embedded, longitudinally running tension members, preferably steel cables or textile members, of the elastomer product (1),
• filling a plurality of moulds (26) with an unvulcanized elastomeric material, the moulds (26) together replicating the contour of the profiling (12) of the elastomer product (1),
• bringing the side to be profiled of the elastomeric main body (10) of the elastomer product (1) together with the unvulcanized elastomeric profilings (12) in the moulds (26) in such a way that the elastomeric materials are in contact, and
• vulcanizing the unvulcanized elastomeric profilings (12) of the moulds (26) with the elastomeric main body (10) of the elastomer product (1).

2. Method according to Claim 1 comprising at least the further step of:
• removing the moulds (26) from the vulcanized elastomeric profilings (12) of the elastomer product (1).

3. Method according to Claim 2 comprising at least the further step of:
• cleaning the moulds (26) of vulcanized elastomeric material.

4. Method according to Claim 2 or 3 comprising at least the further step of:
• refilling the moulds (26) with the unvulcanized elastomeric material.

5. Method according to one of the preceding claims comprising at least the further step, after the bringing together and before the vulcanizing, of:
• pressing the side to be profiled of the elastomeric main body (10) of the elastomer product (1) together with the unvulcanized elastomeric profilings (12) in the moulds (26).

6. Method according to one of the preceding claims comprising at least the further step, after the vulcanizing, of:
• moving the elastomeric main body (10) of the elastomer product (1) with the vulcanized elastomeric profilings (12) section by section out of a vulcanization device (20) and at the same time moving the elastomeric main body (10) of the elastomer product (1) with unvulcanized elastomeric profilings (12) section by section into the vulcanization device (20).

7. Method according to one of the preceding claims comprising at least the further step of:
• before the bringing together or during the bringing together, connecting the moulds (26) to the unvulcanized elastomeric material, preferably with a form fit and/or a force fit, to form an arrangement of moulds (26) that is preferably contiguous in the longitudinal direction (X) and/or in the transverse direction (Y).

8. Method according to one of the preceding claims, **characterized in that** the bringing together takes place along a longitudinal direction (X) in the horizontal (X, Y).

9. Method according to one of the preceding claims, **characterized in that** the bringing together takes place in such a way that the elastomeric main body (10) of the elastomer product (1) is applied with its side to be profiled in the vertical direction (Z) from above onto the plurality of moulds (26) with the unvulcanized elastomeric material.

10. Method according to one of the preceding claims, **characterized in that** the elastomeric main body (10) of the elastomer product (1) is provided unvulcanized or vulcanized.

11. Method according to one of the preceding claims, **characterized in that** the filling of the moulds (26) with an unvulcanized elastomeric material takes place as an injection-moulding process.

12. Method according to one of the preceding claims, **characterized in that** the unvulcanized elastomeric material of the profiling (12) corresponds to the unvulcanized elastomeric material of the main body (10).

13. Production installation (2) for profiled elastomer products (1), preferably for profiled conveyor belts (1),
comprising a providing device (25), preferably a winding device (25), for providing an elastomeric main body (10), preferably comprising embedded, longitudinally running tension members, preferably steel cables or textile members, of the elastomer product (1),
comprising a plurality of moulds (26), which together replicate the contour of the profiling (12) of the elastomer product (1),
comprising a filling device (28) for filling the moulds (26) with an unvulcanized elastomeric material,
comprising a bringing-together device (23) for bringing together the side to be profiled of the elastomeric main body (10) of the elastomer product (1) with the unvulcanized elastomeric profilings (12) in the moulds (26) in such a way that the elastomeric materials are in contact, and
comprising a vulcanization device (20), preferably a vulcanization press (20), for vulcanizing the elastomeric unvulcanized profilings (12) of the moulds (26) with the elastomeric main body (10) of the elastomer product (1).

14. Mould (26) for use in a method according to one of Claims 1 to 10 and/or in a production installation (2) according to Claim 13.

## Revendications

1. Procédé de fabrication d'un produit élastomère profilé (1), de préférence d'une courroie transporteuse profilée (1), avec au moins les étapes suivantes :
• la fourniture d'un corps de base élastomère (10), de préférence avec des supports de traction incorporés s'étendant dans la direction longitudinale, de préférence des câbles d'acier ou du textile, du produit élastomère (1),
• le remplissage d'une pluralité de moules (26) avec un matériau élastomère non vulcanisé, les moules (26) reproduisant ensemble le contour du profilage (12) du produit élastomère (1),
• la réunion du côté à profiler du corps de base élastomère (10) du produit élastomère (1) avec les profilages élastomères non vulcanisés (12) dans les moules (26) de telle sorte que les matériaux élastomères soient en contact, et
• la vulcanisation des profilages élastomères non vulcanisés (12) des moules (26) avec le corps de base élastomère (10) du produit élastomère (1).

2. Procédé selon la revendication 1, avec au moins l'étape supplémentaire suivante :
• le retrait des moules (26) des profilages élastomères vulcanisés (12) du produit élastomère (1).

3. Procédé selon la revendication 2, avec au moins l'étape supplémentaire suivante :
• le nettoyage des moules (26) de matériau élastomère vulcanisé.

4. Procédé selon la revendication 2 ou 3, avec au moins l'étape supplémentaire suivante :
• le nouveau remplissage des moules (26) avec le matériau élastomère non vulcanisé.

5. Procédé selon l'une quelconque des revendications précédentes, avec au moins l'étape supplémentaire suivante après la réunion et avant la vulcanisation :
• le pressage du côté à profiler du corps de base élastomère (10) du produit élastomère (1) avec les profilages élastomères non vulcanisés (12) dans les moules (26).

6. Procédé selon l'une quelconque des revendications précédentes, avec au moins l'étape supplémentaire suivante après la vulcanisation :
• le déplacement par sections du corps de base élastomère (10) du produit élastomère (1) avec les profilages élastomères vulcanisés (12) hors d'un dispositif de vulcanisation (20) et le déplacement simultané par sections du corps de base élastomère (10) du produit élastomère (1) avec des profilages élastomères non vulcanisés (12) dans le dispositif de vulcanisation (20).

7. Procédé selon l'une quelconque des revendications précédentes, avec au moins l'étape supplémentaire suivante :
• avant la réunion ou lors de la réunion, la liaison des moules (26) avec le matériau élastomère non vulcanisé, de préférence par complémentarité de forme et/ou par adhérence, pour former un agencement de moules (26) cohérent, de préférence dans la direction longitudinale (X) et/ou dans la direction transversale (Y).

8. Procédé selon l'une quelconque des revendications précédentes, **caractérisé en ce que**
la réunion s'effectue le long d'une direction longitudinale (X) à l'horizontale (X, Y).

9. Procédé selon l'une quelconque des revendications précédentes, **caractérisé en ce que**
la réunion s'effectue de telle sorte que le corps de base élastomère (10) du produit élastomère (1) est appliqué avec son côté à profiler dans la direction verticale (Z) depuis le haut sur la pluralité de moules (26) avec le matériau élastomère non vulcanisé.

10. Procédé selon l'une quelconque des revendications précédentes, **caractérisé en ce que**
le corps de base élastomère (10) du produit élastomère (1) est fourni non vulcanisé ou vulcanisé.

11. Procédé selon l'une quelconque des revendications précédentes, **caractérisé en ce que**
le remplissage des moules (26) avec un matériau élastomère non vulcanisé s'effectue sous forme de procédé de moulage par injection.

12. Procédé selon l'une quelconque des revendications précédentes, **caractérisé en ce que**
le matériau élastomère non vulcanisé du profilage (12) correspond au matériau élastomère non vulcanisé du corps de base (10).

13. Installation de fabrication (2) pour produits élastomères profilés (1), de préférence pour courroies transporteuses profilées (1),
avec un dispositif de fourniture (25), de préférence un dispositif d'enroulement (25), pour la fourniture d'un corps de base élastomère (10), de préférence avec des supports de traction incorporés s'étendant dans la direction longitudinale, de préférence des câbles d'acier ou du textile, du produit élastomère (1),
avec une pluralité de moules (26) qui reproduisent ensemble le contour du profilage (12) du produit élastomère (1),
avec un dispositif de remplissage (28) pour remplir les moules (26) avec un matériau élastomère non vulcanisé,
avec un dispositif de réunion (23) pour réunir le côté à profiler du corps de base élastomère (10) du produit élastomère (1) avec les profilages élastomères non vulcanisés (12) dans les moules (26) de telle sorte que les matériaux élastomères soient en contact, et
avec un dispositif de vulcanisation (20), de préférence une presse de vulcanisation (20), pour vulcaniser les profilages élastomères non vulcanisés (12) des moules (26) avec le corps de base élastomère (10) du produit élastomère (1).

14. Moule (26) pour utilisation dans un procédé selon l'une quelconque des revendications 1 à 10 et/ou dans une installation de fabrication (2) selon la revendication 13.
